Europäisches Patentamt

European Patent Office

Office européen des brevets

(19)

(11) Veröffentlichungsnummer: **0 242 742**
**A2**

(12) **EUROPÄISCHE PATENTANMELDUNG**

(21) Anmeldenummer: **87105359.1**

(22) Anmeldetag: **10.04.87**

(51) Int. Cl.⁴: **H04Q 9/00**

(30) Priorität: **18.04.86 DE 3613108**

(43) Veröffentlichungstag der Anmeldung:
**28.10.87 Patentblatt 87/44**

(84) Benannte Vertragsstaaten:
**AT BE CH DE ES FR GB GR IT LI LU NL SE**

(71) Anmelder: **LUMINO Licht Elektronik GmbH**
**Oppumer Strasse 81**
**D-4150 Krefeld 1(DE)**

(72) Erfinder: **Kemper, Rolf**
**Fürstenberger Strasse 34**
**D-4230 Wesel(DE)**

(54) Schaltungsanordnung zum gezielten Ansteuern von Funktionsmodulen über ein Bus-System.

(57) Eine Schaltungsanordnung zum gezielten Ansteuern von Funktionsmodulen (15) soll dafür ausgelegt sein, bei geringem schaltungstechnischen Aufwand für ein Bus-System (XY) eine rasche und freizügige Auswahl einzelner der Funktionsmodule (15) oder bestimmter Modul-Gruppen mit geringem Datenübertragungsbedarf zu ermöglichen. Dafür ist bevorzugt vorgesehen, Matrix-Spaltenleitungen (Xi) und -Zeilenleitungen (Yi) über Signalgeber in Form von Unterbrecher-Schaltern (13xi, 13yi) an die Versorgungs-Leitungen (X, Y) einer zentralen Leistungsquelle (12) anzuschließen und die Funktionsmodule (15ij) über die Kreuzungsbereiche (ij) der Matrix-Leitungen (Xi, Yj) zu speisen. Wenn der Stromkreis zur Leistungsquelle (12) in zeitlich definiertem Abstand (ij) auf der einen Matrix-Leitung (Xi) und auf der anderen Matrix-Leitung (Yj) kurzzeitig unterbrochen wird, dann wird dadurch genau derjenige Funktionsmodul (15ij) angesteuert, der über diesem Kreuzungsbereich (ij) eingeschaltet ist und die zweite Versorungs-Unterbrechung nach genau dieser Zeitspanne (tij) abfragt. Durch ein Verfahren der gleichen Art ist eine Übertragung von Daten aus dem Funktionsmodul (15ij) zu einem angeschlossenen Rechner möglich.

FIG 2

## Schaltungsanordnung zum gezielten Ansteuern von Funktionsmodulen über ein Bus-System

Die Erfindung betrifft eine Schaltungsanordnung gemäß dem Oberbegriff des Anspruches 1.

Eine derartige Schaltungsanordnung ist aus der DE-PS 25 03 679 bekannt. Die einzelnen über das Bus-System selektiv ansteuerbaren Funktionsmodule sind dort durch die Lage jeweils eines, einen Funktionsmodul individualisierenden, Zeitfensters innerhalb eines jeden von aufeinanderfolgenden Auswahlzyklen definiert. Die Lage des jeweiligen Zeitfensters ab Beginn eines jeden Auswahlzyklus kann analog, etwa über die Zeitkonstante einer Kippstufe, oder digital, also über die jeweilige Zählposition eines den gesamten Auswahlzyklus in eine Folge von Zeitfenstern unterteilenden Zählers, vorgegeben sein. Ein bestimmter, über die Lage des Zeitfensters in einem Auswahlzyklus individualisierter Funktionsmodul kann also über das Bus-System gezielt angesteuert werden, wenn zum durch die Lage des Zeitfensters definierten Zeitpunkt ab Beginn des Auswahlzyklus ein Steuersignal auf das Bus-System gegeben wird: Wenn das Auftreten dieses Steuersignals in einem der Funktionsmodule zeitlich mit seinem Zeitfenster zusammenfällt, wird dadurch eine Koinzidenzstufe durchgesteuert und genau dieser Funktionsmodul ist angesteuert. Daraus folgt jedoch, daß über das Bus-System unterschiedliche Funktionsmodule nur dann gleichzeitig angesteuert werden können, wenn sie eine zeitlich übereinstimmende Lage ihres Zeitfensters im Auswahlzyklus aufweisen - mit der weiteren funktionellen Einschränkung, daß solche eine übereinstimmende Lage ihres Zeitfensters aufweisende Funktionsmodule nicht individuell zu voneinander unterschiedlichen Zeiten angesteuert werden können. Nachteilig bei der gattungsbildenden Schaltungsanordnung ist darüber hinaus, daß eine große Anzahl von zu unterschiedlichen Zeitpunkten anzusteuernden Funktionsmodulen aufgrund der endlichen Länge der Zeitfenster und der funktionsnotwendig zwischen aufeinanderfolgenden Zeitfenstern einzuhaltenden Abstände zu einer Folge jeweils sehr langer Auswahlzyklen führt, woraus relativ lange Wartezeiten bei der wiederholten Ansteuerung eines und desselben Funktionsmoduls resultieren.

In Erkenntnis dieser Gegebenheiten liegt der Erfindung die Aufgabe zugrunde, eine Schaltungsanordnung gattungsgemäßer Art dahingehend weiterzubilden, daß größere Freizügigkeit in der gezielten Ansteuerung einzelner oder gleichzeitig mehrerer Funktionsmodule bei Möglichkeit rascherer Folgeansteuerung ein-und desselben Funktionsmoduls eröffnet wird.

Diese Aufgabe wird erfindungsgemäß im wesentlichen dadurch gelöst, daß die gattungsgemäße Schaltungsanordnung die kennzeichnenden Merkmale des Hauptanspruches aufweist.

Nach dieser Lösung sind die über ein Bus-System gezielt ansteuerbaren Funktionsmodule durch ihre Lage in einer Schalt-Matrix individualisiert, in deren Spaltenleitungen und in deren Zeilenleitungen individuell ansteuerbare Signalgeber vorgesehen sind. Die Aufeinanderfolge von Signalabgaben (Telegrammen) auf der Spaltenleitung und auf der Zeilenleitung an dem interessierenden Kreuzungsbereich der Matrix wird vom dort eingeschalteten Funktionsmodul daraufhin abgefragt, ob ein definierter Signal-Abstand und Signal-Inhalt gegeben ist. Wenn außer der Position in der Matrix auch diese Kriterien dem speziellen Funktionsmodul zugeordnet sind, ist er individuell angesteuert. Die Funktionsmodule sind also über zwei zeitlich versetzte Signale ansteuerbar, die auf zueinander versetzten X-Y-Leitungen gesendet werden.

Daraus resultiert, daß an derselben Kreuzungsstelle der Matrix auch Funktionsmodule eingeschaltet und individuell angesteuert werden können, die zum Beispiel durch unterschiedliche Signalabstände oder Signalinhalte voneinander unterschieden sind, ohne daß es hierfür vergrößerten Bus-Leitungsaufwandes bedarf.

Ein besonders geringer Aufwand für das Bus-Leitungssystem ergibt sich, wenn die Zeilen-und Spalten-Leitungen der Schaltungsmatrix zugleich die zweipoligen Versorgungsleitungen der Funktionsmodule sind. Die Signalgeber können dann einfach als Ruheschalter ausgebildet sein, und die Signalgabe erfolgt durch kurzzeitige Unterbrechung der zum jeweiligen Matrix-Kreuzungsbereich führenden Versorgungsleitungen. Diese Versorgungs-Unterbrechung ist seitens der Funktionsmodule schaltungstechnisch relativ einfach und funktionssicher dadurch detektierbar, daß der vorübergehende Zusammenbruch eines Spannungsabfalls des Stromes über einem Eingangs-oder Grundlastwiderstand mittels einer spannungsgesteuerten Schaltung, wie etwa einem Differenzverstärker abgefragt wird. Die Funktion dieser Abfrageschaltung während der aufeinanderfolgenden kurzen Versorgungs-Unterbrechungen ist auf den beiden Anschlußleitungen durch eine einfache Speicherschaltung sicherstellbar.

Angesteuert wird bei diesem Realisierungsbeispiel über das Bus-System also nur derjenige Funktionsmodul, der an derjenigen Kreuzungsstelle der Matrix-Leitungen liegt, die in definiertem Abstand nacheinander kurzzeitig von der Energieversorgung aus einer zentralen Leistungsquelle abgeschaltet werden. Dabei können an derselben Kreuzungsstelle liegende Funktionsmodule durch zeitlich unterschiedliche Abstände dieser Leitungsunterbrechungen und/oder dadurch individualisiert sein, welche der beiden Matrix-Leitungen als erste und welche erst danach als zweite kurzzeitig unterbrochen wird. Alle Zeiten, durch die Funktionsmodule an einer Kreuzungsstelle der Matrix individualisiert sind, können auch an allen anderen Kreuzungsstellen der Matrix vorgesehen sein, was bei einer großen Anzahl individuell ansteuerbarer Funktionsmodule dennoch zu einer geringen - gegebenenfalls sogar zu einer einzigen - Zeitspanne zwischen zwei Versorgungs-Unterbrechungen führt; denn angesteuert wird ja nur derjenige Funktionsmodul, bei dem die beiden aufeinanderfolgend kurzzeitig unterbrochenen Matrix-Leitungen sich kreuzen, und wenn an dieser Kreuzungstelle auch die Aufeinanderfolge der Unterbrechungen den zutreffenden Zeitabstand aufweist.

Das ermöglicht die wahlfreie Ansteuerung unterschiedlicher Funktionsmodule gleichzeitig, wenn an mehreren Kreuzungsstellen die Matrix-Leitungen im zutreffenden zeitlichen Abstand kurzzeitig unterbrochen werden. Eine Einschränkung in dem Sinne, daß der Ablauf bestimmter Auswahlzyklen abgewartet werden muß, um einen bestimmten Funktionsmodul abermals anzusteuern, ist nicht mehr gegeben.

Bei den Funktionsmodulen kann es sich um einfache oder um intelligente Anzeigesysteme sowie um Dateneingabesysteme bzw. um Kombinationen solcher Systeme handeln, die bei zeitlicher Koinzidenz der Aufeinanderfolge der Signalgaben an der betreffenden Matrix-Kreuzung mit der in diesem Funktionsmodul jeweils vorgegebenen Lage eines Zeittores durchgesteuert bzw. freigegeben werden. Diese Freigabe kann bestehen bleiben, bis sie intern oder extern - beispielsweise mit Beeindigung einer Informationseingabe - wieder aufgehoben wird. Zur Informationsübermittlung über das Bus-System kann eine kodierte Folge von Pegeleinbrüchen auf den Bus-Leitungen durch deren Belastung, beispielsweise durch kurzzeitige Kurzschlüsse, vorgesehen sein, wobei diese Pegelschwankungen über einen Detektor an beliebigem Ort des Bus-Systems abgefragt und dekodiert werden können.

Der Datenübertragungsaufwand bei der erfindungsgemäßen Schaltungsanordnung ist also wesentlich geringer, als herkömmlicherweise bei seriellen Datenströmen zur individuellen Bus-Ansteuerung bestimmter Funktionsmodule, da nun lediglich in bestimmtem zeitlichen Raster kurze Unterbrechungen der Modul-Speiseleitungen vorgesehen sind. Dabei kann zur Störsicherung vorgesehen sein, nicht eine einfache Unterbrechung auszuwerten, sondern ein bestimmtes Unterbrechungs-Raster, was die Funktionssicherheit der Schaltungsanordnung bei vergleichsweise geringem - schaltungstechnischen Zusatzaufwand erheblich erhöht. Auch in der Aufeinanderfolge unterschiedlicher Kodierungen der Unterbrechungen auf den beiden Versorgungsleitungen kann ein Auswertekriterium zur Individualisierung bestimmter Funktionsmodule liegen. Andererseits kann eine bestimmte Zuordnung von Funktionsmodulen zu bestimmten Matrix-Kreuzungsstellen derart vorgesehen sein, daß sie mit Ausnahme hinsichtlich der Lage der Matrix-Kreuzungsstelle gleich individualisiert sind, so daß alle diese interessierenden Funktionsmodule gleichzeitig angesteuert sind, wenn nur die entsprechenden Kreuzungsstellen der Matrix gleichzeitig angesteuert sind. Dieser Schaltungsfall ist beispielsweise von Interesse, wenn mehrere Funktionsmodule über eine allgemein gültige Steuerungsinformation gleichzeitig initiiert werden sollen. Für die darauffolgende individuelle Funktionsweise erfolgt dann wieder eine individuelle Ansteuerung des jeweils zugeordneten Matrix-Kreuzungspunktes.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche stark abstrahiert nach Art eines Blockschaltbildes skizzierten bevorzugten, einfachen Realisierungsbeispiels zur erfindungsgemäßen Lösung. Es zeigt:

Fig. 1 eine Prinzipdarstellung zur Ansteuerung eines Funktionsmoduls,

Fig. 2 eine matrix-artige Zusammenschaltung mehrerer individuell ansteuerbarer Funktionsmodule, eingeschaltet jeweils in einen Kreuzungsbereich eines zeilen-und spaltenförmig organisierten Bus-Leitungssystems,

Fig. 3 die Ansteuerung und Leistungsversorgung des jeweiligen Funktionsmoduls aus dem Bus-Leitungssystem mit Berücksichtigung der Erzeugung einer Rückmelde-Information und

Fig. 4 ein Beispiel für eine matrix-artige Gruppierung von Anzeige-und Eingabe-Funktionsmodulen.

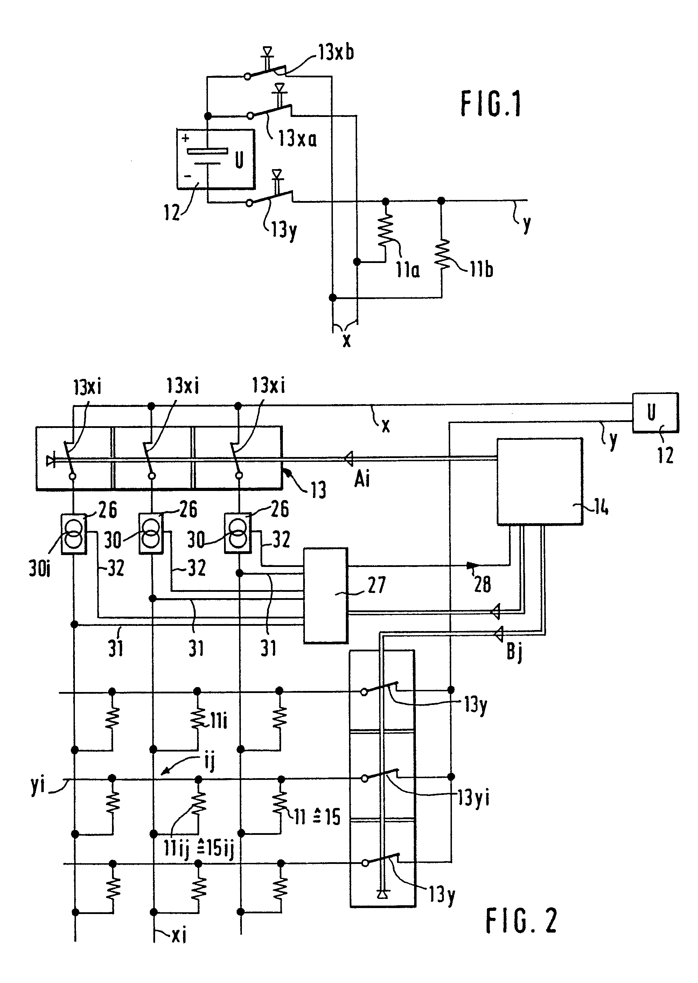

Die Funktion der erfindungsgemäßen Schaltungsanordnung beruht auf der Überlegung, daß es gemäß Fig. 1 grundsätzlich gleichgültig ist, auf welcher Seite eines im Stromkreis liegenden Verbrauchers 11 eine Pegelbeeinflussung vorgenommen wird, wenn diese Pegelbeeinflussung eine Informationsübermittlung an den Verbraucher 11 darstellen soll. Ist insbesondere zur Pegelbeeinflussung eine Unterbrechung des Stromkreises von der Leistungsquelle 12 über den Verbraucher 11 vorgesehen, dann kann wahlweise entweder ein stromsenkenseitiger Schalter 13x oder ein stromquellenseitiger Schalter 13y (kurzzeitig) geöffnet werden; denn in beiden Fällen führt gleichermaßen die Unterbrechung des Stromkreises zum Verschwinden des Spannungsabfalles über dem Verbraucher 11 in diesem Stromkreis.

Wenn die Verbraucher 11 durch eine definierte Zeitspanne zwischen zwei aufeinanderfolgenden derartigen Informationsübermittlungen, in diesem Beispiel also durch eine vorgegebene Zeitspanne zwischen zwei aufeinanderfolgende Stromkreisunterbrechungen, individualisiert und dazu mit einer entsprechend eingerichteten Dekodierschaltung ausgestattet ist, dann spricht diese dann und nur dann an, wenn die kurzzeitigen Stromkreisunterbrechungen gerade in diesem zeitlichen Abstand auftreten. Die Funktionsmodule 15 sind über die Kreuzungen von Matrix-Leitungen Xi und Yj geschaltet. Die Ansteuerung dieser Funktionsmodule 15 erfolgt durch zwei zeitlich versetzte, also im Abstand zueinander folgende Signale, die zur Kreuzungsstelle auf zueinander getrennte X-Y-Leitungen gesendet werden.

Eine wahlfreie selektive Ansteuerungsmöglichkeit und zugleich eine Reduzierung der erforderlichen Anzahl unterschiedlicher Zeitspannen läßt sich erreichen, wenn -wie in Fig. 1 berücksichtigt - die Verbraucher 11 auf mehrere parallele, jeweils mit wenigstens einem Schalter 13 ausgestattete Stromkreise aufgeteilt werden. Im Beispielsfalle gemäß Fig. 1 beginne die verbraucherseitige Auswertung der Dekodierungs-Zeitspanne mit Betätigen (kurzzeitiges Öffnen) des Schalters 13y; daraufhin wird nach der Zeitspanne a der Schalter 13xa für die Ansteuerung des Verbrauchers 11a und nach der entsprechenden (gleichen oder davon abweichenden) Zeitspanne b der Schalter 13xb zum Ansteuern des Verbrauchers 11b betätigt. Auf diese Weise sind also Verbraucher 11 auch dann individuell ansteuerbar, wenn sie durch gleiche Zeitspannen der Pegelbeeinflussung individualisiert sind; während andererseits auf diese Weise eine quasi parallele Anwahl von Verbrauchern 11 möglich ist, obgleich diese durch unterschiedliche Zeitspannen der Pegelbeeinflussung individualisiert sind.

Eine konsequente Weiterführung dieser in Fig. 1 berücksichtigten Erweiterung auf parallele Stromkreise mit zwei, also jeweils vor und hinter dem Verbraucher 11 liegenden Schaltern 13 führt gemäß Fig. 2 auf das Schema einer Verdrahtungsmatrix aus X-Leitungen, die über individuell ansteuerbare Schalter 13x an dem einen Pol der Leistungsquelle 12 angeschlossen sind, und aus Y-Leitungen, die über individuell ansteuerbare Schalter 13 y an dem anderen Pol der Leistungsquelle 12 angeschlossen sind, sowie mit in den Kreuzungsbereichen zwischen diese X-Y-Leiterstrukturen eingeschalteten Verbrauchern 11. Dabei müssen bei der apparativen Ausführung solcher Matrix-Verschaltung der Verbraucher 11 diese und deren Anschlußleitungen X Y natürlich nicht ebenfalls gemäß dem Übersichtsschema matrix-artig angeordnet sein; vielmehr können die einzelnen Verbraucher 11 beliebig beispielsweise in einer komplexen Warte gelegen und an ein entsprechend mehradriges, die X-und Y-Leitungen führendes Bus-Kabel angeschlossen sein.

Wenn nun ein bestimmter Verbraucher 11 ij von einem Auswahlgerät 14 her angesprochen werden soll, braucht nur bekannt zu sein, in welcher Koordinate ij dieser Verbraucher 11 an das Bus-System XY angeschlossen ist und durch welche Pegelbeeinflussungs-Zeitspanne dieser Verbraucher 11 ij individualisiert ist. Es wird dann zunächst beispielsweise der zugeordnete Schalter 13xi urd um die Individualisierungs-Zeitspanne zeitlich dagegen versetzt der andere zugeordnete Schalter 13yj betätigt. Daraus ergibt sich eine sehr hohe Ansteuersicherheit; denn es kann überhaupt nur ein in diesem Koordinaten-Kreuzungspunkt zwischen die Bus-Leitungen Xi und Yj eingeschalteter Verbraucher 11 ij angesprochen werden, und dieser wird nur bei Übereinstimmung seiner vorgegebenen Individualisierungs-Zeitspanne mit dem tatsächlichen zeitlichen Abstand der Schalterbetätigung 13xi-13yj tatsächlich angesprochen. Andererseits können nach Betätigung des Schalters 13xi mehrere an die Leitung Xi angeschlossene Verbraucher 11 i gezielt angesteuert werden, wenn die in den zugeordneten Leitungen Y liegenden Schalter 13y entsprechend verzögert betätigt werden.

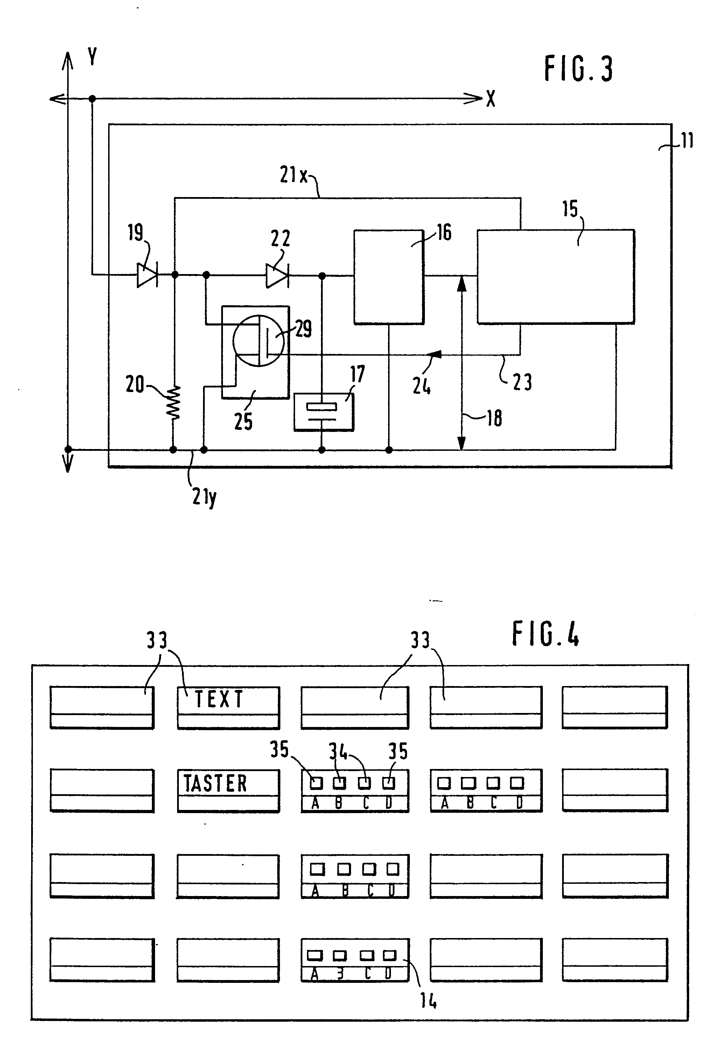

Die Verbraucher 11 beinhalten Schaltungen mit Funktionsmodulen 15, wie unten noch näher erläutert wird, vgl. Fig. 3. Ihre Versorgungsspannung erhalten diese Funktionsmodule 15 zweckmäßigerweise über die Anschlüsse der X-Y-Leitungen aus der Leistungsquelle 12. Um eine störungsfreie, nämlich unterbrechungsfreie Bereitstellung der Versorgung der Funktionsmodule 15 (trotz der für die selektive Ansteuerung eines Verbrauchers 11 jeweils kurzzeitigen Öffnung der Schalter 13) sicherzustellen, ist den Modulen 15 eine Stabilisierungsschaltung 16 mit Überbrückungs-Speicher 17 vorgeschaltet, wie aus der Schaltungstechnik geregelter Netzgeräte als solches bekannt. Die Stabilisierungsschaltung 16 liefert also auch dann noch die funktionserforderliche Betriebsspannung 18 zum unterbrechungsfreien Betrieb des Funktionsmoduls 15, wenn (aufgrund Betätigung eines Schalters 13, Fig. 2) vorübergehend der Speisestromkreis in einer der Leitungen X oder Y unterbrochen ist.

Zur Vereinfachung der Darstellung der Furktionsweise ist im Verbraucher 11 gemäß Fig. 3, parallel zur Stabilisierungsschaltung 16, in den Stromkreis der Leitungen X, Y über eine Entkopplungsdiode 19 ein Grundlastwiderstand 20 eingeschaltet. Der über diesem auftretende Spannungsabfall wird vom Funktionsmodul 15 über Steuerleitungen 21 abgefragt.

Bei geschlossenem Stromkreis über die Leitungen X-Y, wenn also in diesem Stromkreis kein Schalter 13 geöffnet ist, fließt ein Laststrom über den Widerstand 20. Der daraus resultierende Spannungsabfall führt zu einem positiven Potential auf der Steuerleitung 21x gegenüber der Steuerleitung 21y. Wenn in diesem Stromkreis (wenigstens) einer der Schalter 13x oder 13y geöffnet wird, setzt der Stromfluß über den Widerstand 20 aus, da der Speicher 17 sich nicht entgegen der Durchlaßrichtung einer Sperrdiode 22 entladen kann; d.h. die Steuerleitungen 21x, 21y liegen auf gleichem Potential, wenn einer der Schalter 13 im Stromkreis dieses Verbrauchers 11 geöffnet wird.

Der Verbraucher 11 liefert auf einer Bestätigungsleitung 23 ein Dekodier-Quittungssignal 24, welches zeitverzögert gegenüber dem Potentialausgleich auf den Leitungen 21 ansteht und im Beispielsfalle der Fig. 3 zur vorübergehenden Ansteuerung einer Bürde 25 parallel zum Grundlastwiderstand 20 im Stromkreis der Leitungen X-Y dient. Diese zusätzliche Belastung führt nämlich dann (Fig. 2) an einer Abfrageschaltung 26 bei wieder geschlossenen Schaltern 13, also bei wieder geschlossenem Stromkreis über die Leitungen X-Y, zu einer entsprechenden Potentialabsenkung. Diese Potentialabsenkung kann in einem Spannungsdetektor 27 erfaßt und zur Ausgabe eines Ansteuer-Quittungssignales 28 an das Auswahlgerät 14 umgesetzt werden.

Für einen besonders deutlichen, also starken Pegeleinbruch kann die Bürde 25 einfach als elektronisch ansteuerbarer Kurzschlußschalter 29 (in Fig. 3 dargestellt als Feldeffekttransistor) ausgelegt sein. Während die Abfrageschaltung 26 grundsätzlich einfach aus einem Entkopplungswiderstand bestehen kann, ist insbesondere im Kurzschlußfalle zur Vermeidung von Überlastungen der Leistungsquelle 12 dort der Einsatz einer Strombegrenzungsschaltung 30 zweckmäßiger, wie sie etwa aus der Schaltungstechnik des Überlastungsschutzes von Netzgeräten grundsätzlich bekannt ist. Um andererseits zwischen den Steuerleitungen 21x-21y im Ansteuerungsfalle einen deutlichen Potentialsprung sicherzustellen, ist es vorteilhaft, wie in Fig. 2 berücksichtigt, in jedem an die Leistungsquelle 12 angeschlossenen Stromkreis eine aus dem Auswahlgerät 14 bzw. über den Spannungsdetektor 27 umsteuerbare Strombegrenzungsschaltung 30 vorzusehen, die nur dann und solange auf reduzierte Strombegrenzung umgesteuert wird, als im entsprechenden Stromkreis aufgrund der Auswahlgegebenheiten beim Gerät 14 ein Rückmeldungssignal 28 zu erwarten ist. Deshalb ist gemäß Fig. 2 dann jede Abfrageschaltung 26 außer über eine Abfrageleitung 31 auch noch über eine Umsteuerleitung 32 an den Spannungsdetektor 27 bzw. des Auswahlgerät 14 angeschlossen.

Wie oben erläutert, ist jeder Verbraucher 11 und damit jeder Funktionsmodul 15 (Fig. 3) durch eine definierte Zeitspanne zwischen zwei aufeinanderfolgenden, durch kurzzeitiges Öffnen von Schaltern 13 hervorgerufenen Pegeländerungen individualisiert.

Zur Vereinfachung der Beschreibung des Funktionsbeispiels war angenommen, daß Steuersignale jeweils durch Potentialausgleich zwischen den Steuerleitungen 21x-21y, also jeweils schon durch einmalige Betätigung (Öffnung) eines der Schalter 13 hervorgerufen werden. Zur größeren Störsicherheit und zur komplexeren Zuordnungsmöglichkeit bei der selektiven Ansteuerung von Funktionsmodulen 15 kann aber auch hier vorgesehen sein, über die Schalter 13 (durch Mehrfach-Betätigung) definierte Umpulsserien-Telegramme Ai bzw. Bj (Fig. 2) vorzugeben, die in einer Dekodierschaltung verifiziert werden müssen, um die Zeitspanne tij starten und durchsteuern zu können.

In Fig. 4 ist ein typischer Einsatzfall einer erfindungsgemäßen Anordnung skizziert, wie er etwa in Betriebswarten oder bei opto-elektronischen Werbemitteln vorkommen kann. Es handelt sich um eine beispielsweise mosaikartige Anordnung intelligenter Displays 33 mit dazwischen vereinzelt angeordneten Betätigungstasten 34 bzw. 35 von Eingabemodulen, etwa zur manuellen Beeinflussung der Anzeigen auf bestimmten Displays 33, die individuell mittels des zentralen Auswahlgerätes 14 freigegeben werden können (Fig. 3).

Durch die vorgeschlagene Schaltungsanordnung zum gezielten Ansteuern von Funktionsmodulen 15 bzw. 15ij wird ein Matrix-Adressierverfahren geschaffen, bei dem durch zwei zeitlich versetzte und auf zueinander getrennten X-Y-Leitungen gesendete Signale über Kreuzungen von Matrix-Leitungen Xi, Yi geschaltet sind. In diesen Matrix-Leitungen Xi, Yi sind Signalgabe-Schalter 13xi, 13yi eingesetzt, an die wiederum die Versorgungsleitungen X, Y zu der zentralen Leistungsquelle 12 angeschlossen sind. Die Funktionsmodule 15 bzw. 15ij erlauben über die angeschlossenen Leitungen und entsprechend gesteuerten Schalter 13xi, 13yi, daß sowohl eine Übertragung von Daten oder Signalen oder Befehlen von einem vorzugsehenden Rechner oder Auswahlgerät 14 zu ihnen als auch von ihnen zu einem Rechner oder einem Auswahlgerät 14 möglich ist. Damit schafft dieses Matrix-Adressierverfahren in einfacher Weise die gezielte Ansteuerung von Funktionsmodulen 15 bzw. 15ij ebenso wie den gezielten Abruf von bestimmten Funktionsmodulen 15 bzw. 15ij zu einem angeschlossenen Rechner zwecks Weiterverarbeitung der erhaltenen Daten und Befehle.

## Ansprüche

1. Schaltungsanordnung zum gezielten Ansteuern von Funktionsmodulen (15) über ein Bus-System (XY), dadurch gekennzeichnet,
daß die Funktionsmodule (15), die durch zwei zeitlich versetzte und auf zueinander getrennten X-Y-Leitungen gesendeten Signale ansteuerbar sind, über die Kreuzungen von Matrix-Leitungen (Xi, Yj) geschaltet sind, in denen jeweils ein Signalgabe-Schalter (13xi, 13yj) vorgesehen ist.

2. Schaltungsanordnung nach Anspruch 1, dadurch gekennzeichnet,
daß die Matrix-Leitungen (Xi, Yj) die Versorgungsleitungen für die Speisung der Funktionsmodule (15ij) sind, die über die Schalter (13x, 13y) an die Versorgungs-Leitungen (X, Y) von einer zentralen Leistungsquelle (12) angeschlossen sind.

3. Schaltungsanordnung nach Anspruch 1 oder 2, dadurch gekennzeichnet,
daß Schalter (13x, 13y) von einem zentralen Auswahlgerät (14) individuell ansteuerbar sind.

4. Schaltungsanordnung nach Anspruch 2 oder 3, dadurch gekennzeichnet,
daß jeder Funktionsmodul (15) einer Stabilisierungsschaltung (16) nachgeschaltet ist.

5. Schaltungsanordnung nach einem der Ansprüche 2 bis 4, dadurch gekennzeichnet,
daß zwischen Kreuzungsbereichen (ij) der Matrix-Leitungen (Xi, Yj) von den angesteuerten Funktionsmodulen (15) einschaltbare zusätzliche Bürden (25) vorgesehen sind.

6. Schaltungsanordnung nach Anspruch 5, dadurch gekennzeichnet,
daß an die Matrix-Leitungen (Xi, Yj) Spannungsdetektor-Abfrageleitungen (31) angeschlossen und zwischen dem Anschluß einer Abfrageleitung (31) und dem Anschluß einer Matrix-Leitung (Xi, Yj) an die Versorgungs-Leitungen (X, Y) Strombegrenzungsschaltungen (30) vorgesehen sind.

7. Schaltungsanordnung nach einem der vorangehenden Ansprüche,
dadurch gekennzeichnet,
daß Funktionsmodule (15) mit intelligenten Displays (33) vorgesehen sind.

8. Schaltungsanordnung nach einem der vorangehenden Ansprüche,
dadurch gekennzeichnet,
daß Funktionsmodule (15) mit Eingabemitteln (Eingabetasten 34) vorgesehen sind, die Bürden (25) über die Kreuzungsbereiche (ij) zwischen die Matrix-Leitungen (Xi, Yj) schalten.

9. Schaltungsanordnung nach einem der Ansprüche 2 bis 8, dadurch gekennzeichnet,
daß im Funktionsmodul (15) der Spannungsabfall über einen Grundlastwiderstand (20) abgefragt wird, der zwischen den Kreuzungsbereich der Matrix-Leitungen (Xi, Yj) zugeschaltet ist.

10. Schaltungsanordnung nach einem oder mehreren der vorgenannten Ansprüche,
dadurch gekennzeichnet,
daß die durch zwei zeitlich versetzte und auf zueinander getrennten X-Y-Leitungen gesendeten Signale ansteuerbaren Funktionsmodule (15) über die Kreuzungen von Matrix-Leitungen (Xi, Yi) geschaltet sind, in denen jeweils ein Signalgabe-Schalter (13xi, 13yi) vorgesehen ist, daß die Matrix-Leitungen (Xi, Yi) die Versorgungsleitungen für die Speisung der Funktionsmodule (15 bzw. 15ij) sind, die über Schalter (13xi, 13yi) an die Versorgungsleitungen (X, Y) einer zentralen Leistungsquelle (12) angeschlossen sind und
daß Daten, Befehle, Signale od. dgl. sowohl von einem angeschlossenen Rechner oder Auswahlgerät (14) zu einem Funktionsmodul (15 bzw. 15ij) als auch von einem Funktionsmodul (15 bzw. 15ij) zu einem angeschlossenen Rechner oder Auswahlgerät (14) übertragbar sind.

FIG.1

FIG. 2

FIG.3

FIG.4